# EUROPEAN PATENT APPLICATION

(11) **EP 3 594 185 A1**
(43) Date of publication of application: **15.01.2020**
(21) Application number: 18382526.4
(22) Date of filing: 13.07.2018
(51) Int. Cl.: C02F 1/00, C02F 1/28, C02F 1/72, C02F 1/48, C02F 101/20, C02F 101/30

(54) **WATER TREATMENT**

(71) Applicant: Fundació Institut de Bioenginyeria de Catalunya (IBEC), 08028 Barcelona (ES); Institució Catalana de Recerca i Estudis Avançats, 08010 Barcelona (ES)
(72) Inventor: Sánchez Ordóñez, Samuel, 08028 Barcelona (ES); Parmar, Jemish, 08028 Barcelona (ES); Villa Gómez, Katherine, 08028 Barcelona (ES); Vilela Garcia, Diana, 08028 Barcelona (ES)
(74) Representative: ZBM Patents - Zea, Barlocci & Markvardsen

(57) **Abstract**

A water treatment system (1) comprising a primary gastight treatment chamber (21) comprising: a closable water inlet (26), and a water outlet (29) closed by a membrane (5), wherein the membrane prevents a flow of water when the pressure in the chamber is below a predetermined threshold and allowing the flow of water therethrough and out of the chamber when the pressure in the chamber is above the predetermined threshold, and micromotors (3) inside the treatment chamber, wherein the micromotors comprise: a functional region (32) comprising a material functionalized to remove a pollutant (34) from the water, and a driving region (31) comprising a material for generating gas bubbles (33) and causing build-up of pressure inside the chamber. A water treatment method is also provided.

## Description

The present disclosure relates to systems and methods of water treatment, in particular polluted water treatment.

### BACKGROUND

To provide an adequate access to clean water and to keep the water resources in a proper condition are persistent problems worldwide. Several devices and methods have been developed to achieve that goal over the past years. Most of the known treatments involve the use of chemical compounds and physical disinfectants. However, the known treatments may form harmful byproducts. Furthermore, the resistance of some pathogens may urge the authorities to increase the dose of the compounds and/or to combine them. The latter may exacerbate the formation of harmful byproducts.

One of the most promising recent developments in the field of waste or polluted water treatments are the so-called "micromotors". Micromotors may comprise different configurations aimed to remove water pollutants such as microorganisms, organic compounds, heavy metals, etc.

Micromotors may be self-propelled through the polluted medium. Self-propulsion may be achieved due to the capability of micromotors to convert chemical energy into kinetic energy. The conversion may be performed by means of chemical reactions in which gas bubbles are produced. A stream of gas bubbles separates and jets from each micromotor. This way, a thrust force is generated and micromotors may be driven through the polluted medium such as water.

However, the use of micromotors is usually limited to laboratories or the like for treating water. The installations are characterized by complex configurations which do not allow an autonomous use in remote locations.

A further solution for treating water is embodied by vacuum or positive pressure filtration devices. These devices require a pressure source for effectively treating water. The vacuum or positive pressure is used to drive water through filters which are the responsible for the treatment. The pressure source has to be fed, directly or indirectly, with power so using these devices implies power consumption. This may prevent the use of the device in remote locations where electricity or other power sources may not be available.

It is an object of the present disclosure to provide examples of water treatment systems and methods that avoid or at least reduce one or more of the aforementioned drawbacks.

### SUMMARY

In a first aspect, a water treatment system is provided. The system comprises:
a primary gastight treatment chamber comprising:
   - a closable water inlet, and
   - a water outlet closed by a membrane, wherein the membrane prevents a flow of water when the pressure in the chamber is below a predetermined threshold and allowing the flow of water therethrough and out of the chamber when the pressure in the chamber is above the predetermined threshold, and
micromotors inside the treatment chamber,
wherein the micromotors comprise:
   - a functional region comprising a material functionalized to remove a pollutant from the water, and
   - a driving region comprising a material for generating gas bubbles and causing build-up of pressure inside the chamber.

When the treatment chamber contains at least micromotors and water to be treated, the functionalized material may remove pollutant from the water and the driving material may generate gas bubbles, for example by chemically reacting with the water or with a product added to the water. As a consequence of the generation of gas bubbles, a positive pressure may be built up in the treatment chamber, until the pressure inside the chamber reaches the predetermined threshold and water may flow through the membrane and out of the chamber.

The driving material of the micromotors for generating gas bubbles and the specific features of the membrane may be selected such that before flowing out through the membrane the water may remain in the treatment chamber the time required to remove the desired amount of pollutant by the action of the functional material of the micromotors.

There may be a building-up of pressure inside the chamber because the chamber may be gastight.

Moreover, the system may take advantage of built-up pressure generated inside the chamber to cause the water to flow out through the membrane. The driving force to induce the circulation of water out of the treatment chamber may be provided by the gas bubbles which may be produced by the interaction between polluted water and micromotors or chemical substances added to the polluted water and the micromotors.

Micromotors may move autonomously through the medium to be treated. This may induce mixing of the functional regions and the pollutant. Therefore, the system does not require external mixing such as agitation which may be typical in laboratories or the like.

An external power source is not essential in the system according to the aspect. As the driving material may have two functions: propulsion of the micromotor and building-up pressure inside the chamber, the system may avoid the need of using an external motive force such as gravitational force, hydraulic pressure of the water to be treated, a positive or negative pressure source, etc. to implement the water treatment. Furthermore, external power source is not needed for agitation of the polluted water and the micromotors.

All in all, the treatment may be carried out by the system autonomously without the need of a power source. The water treatment system may also be portable and may be used in remote locations.

The polluted water may be treated by means of the autonomous micromotors and the water may exit from the chamber after a threshold value of pressure may be built-up, so the system may perform the treatment without the direct monitoring of the users. Therefore, the system may be operated without the intervention of a skilled user.

The system may operate in a relatively small space.

In an example, the water treatment system may further comprise a chamber outlet lid configured to prevent the treated water from flowing through the membrane. The latter may be achieved either by preventing water from reaching the membrane upstream or by preventing water from coming out of the membrane downstream. This way, by means of opening/closing the chamber outlet lid, it is possible to confine water in a specific chamber along a predefined time.

In some examples, the material of the driving region of the micromotors may be suitable for generating gas bubbles by chemically reacting with the water to be treated or by inducing a reaction in the water to be treated or in a product added to the water to be treated, preferably hydrogen peroxide.

In some examples, the water treatment system may further comprised at least one secondary gastight treatment chamber, wherein the treatment chambers may be connected in series such that water to be treated flows from the primary chamber to a secondary chamber, and from one secondary chamber to another, wherein each secondary treatment chamber may comprise:
- a water inlet connected to the water outlet of the treatment chamber immediately upstream,
- a water outlet closed by a membrane, wherein the membrane prevents a flow of water when the pressure in the chamber is below a predetermined threshold and allowing the flow of water therethrough and out of the chamber when the pressure in the chamber is above the predetermined threshold, and
micromotors inside the treatment chamber, wherein the micromotors may comprise a functional region comprising a material functionalized to remove a pollutant from the water, and a driving region comprising a material for generating gas bubbles and causing build-up of pressure inside the chamber. Thanks to these features, the user may vary the amount of treatment chambers and the system may still take advantage of the pressure to induce the circulation/flow of the water from one chamber to another. Thus, the system may have a flexible arrangement.

Furthermore, the system may have a multi-stage structure allowing more flexibility in the treatment, e.g. tailoring the treatment to the water to be treated; for example, a different pollutant may be removed in each stage using different micromotors and/or different concentrations of micromotors, adjusting the membrane features if convenient, etc. The stages may be related to a corresponding treatment chamber.

In some examples, a series of treatment chambers may be arranged on top of each other, in such a way that the flow of water may follow, at least partially, a vertical path. In some examples, a series of treatment chambers may be arranged beside each other in such a way that the flow of water may follow, at least partially, a horizontal path. The built-up pressure may drive or displace water through the outlet membrane regardless of the location or orientation of the outlet membrane. For this reason, a proper operation of the system may be assured not only from top to bottom in a vertical direction but also from left to right or from right to left in a horizontal direction. The water may also follow a direction with vertical and horizontal components. Therefore, the system may have a flexible arrangement.

In a further aspect, a water treatment method is provided. The method comprises:
providing a primary gastight treatment chamber with micromotors;
feeding polluted water to the treatment chamber;
allowing a pressure to build-up inside the primary treatment chamber;
causing treated water to exit through a water outlet of the primary treatment chamber;
wherein the micromotors comprise:
   - a functional region comprising a material functionalized to remove a pollutant from the water, and
   - a driving region comprising a material for generating gas bubbles and causing build-up of pressure inside the chamber;
wherein the water outlet is closed by a membrane, and the membrane preventing a flow of water when the pressure in the chamber is below a predetermined threshold and allowing the flow of water therethrough and out of the chamber when the pressure in the chamber is above the predetermined threshold.

An external power source is not needed to carry out the method according to the further aspect. As the driving material may have two functions: propulsion of the micromotor and building-up pressure inside the chamber, the method may avoid the need of using an external motive force such as gravitational force, hydraulic pressure of the water to be treated, a positive or negative pressure source, etc. to implement the water treatment. Furthermore, external power source is not needed for agitation of the polluted water and the micromotors.

The treatment method may be carried out autonomously without the need of a power source. The treatment method may also be carried out in remote locations.

The polluted water may be treated by means of the autonomous micromotors and the water may exit from the chamber after a threshold value of pressure may be built-up, so the method may be performed without the direct monitoring of the users. Therefore, the method may be carried out without the intervention of a skilled user.

In some examples, the water treatment method may further comprise:
providing at least one secondary gastight treatment chamber, wherein the treatment chambers may be connected in series such that water to be treated flows from the primary chamber to a secondary chamber, and from one secondary chamber to another;
providing micromotors inside the secondary treatment chamber;
allowing a pressure to build-up inside the secondary treatment chamber;
causing treated water to exit through a water outlet of the secondary treatment chamber.

The method may have a multi-stage configuration allowing more flexibility in the treatment, e.g. tailoring the treatment to the water to be treated; for example, a different pollutant may be removed in each stage using different micromotors and/or different concentrations of micromotors, adjusting the membrane features if convenient, etc.

In some examples of the water treatment method, a series of treatment chambers may be arranged on top of each other, in such a way that the flow of water may follow, at least partially, a vertical path. In some examples of the water treatment method, a series of treatment chambers may be arranged beside each other in such a way that the flow of water may follow, at least partially, a horizontal path.

The built-up pressure may drive or displace water through the outlet membrane regardless of the location or orientation of the outlet membrane. For this reason, a proper implementation of the method may be assured not only from top to bottom in a vertical direction but also from left to right or from right to left in a horizontal direction. The water may also follow a direction with vertical and horizontal components. Therefore, the method may be implanted in a flexible arrangement.

Throughout the present disclosure, a micromotor should be understood as an autonomous structure in a micro- or nano-scale which propels itself when placed in a fluid medium to carry out a task in the medium.

In the present disclosure word micromotor encompass not only the micromotor itself but also elements commonly referred to as micromachine, microdevice, microjet, microengine, microcleaner, microrobot, microtube, microsphere or the like.

Throughout the present disclosure prefixes "micro-" and "nano-" are interchangeable. The prefix "micro-" will be used when the structure has at least one dimension less than 100 micron scale and the prefix "nano-" when the structure has at least one dimension smaller than 100 nanometer.

Throughout the present disclosure expressions such as polluted water, waste water, contaminated water, water to be treated or the like should be understood as synonyms.

Throughout the present disclosure the expression "water treatment" may refer to the improvement in the quality of water regardless of its source. This improvement may involve the removal of undesired elements of the water such as organic compounds, heavy metals, microorganisms and so on.

Throughout the present disclosure, expressions such as horizontal, vertical, upper, lower, slant, etc are to be understood taking as a reference structure of a water treatment system or the like in an operating condition as a reference.

In the present application, a pressure of the chamber should be understood as a gas pressure inside the chamber.

### BRIEF DESCRIPTION OF THE DRAWINGS

Non-limiting examples of the present disclosure will be described in the following, with reference to the appended drawings, in which:
Figure 1 schematically shows a longitudinal section view of a water treatment system according to one example;
Figure 2 schematically shows a longitudinal section view of a water treatment system according to another example;
Figure 3 schematically shows a longitudinal section view of a water treatment system according to a further example;
Figure 4 schematically shows a longitudinal section view of a water treatment system according to still another example;
Figure 5 schematically shows a micromotor according to one example;
Figure 6 schematically shows a micromotor according to another example;
Figure 7 schematically shows a longitudinal section view of a water treatment system according to an alternative example; and
Figure 8 schematically shows a longitudinal section view of the water treatment system of figure 7 with an optional automation system.

### DETAILED DESCRIPTION OF EXAMPLES

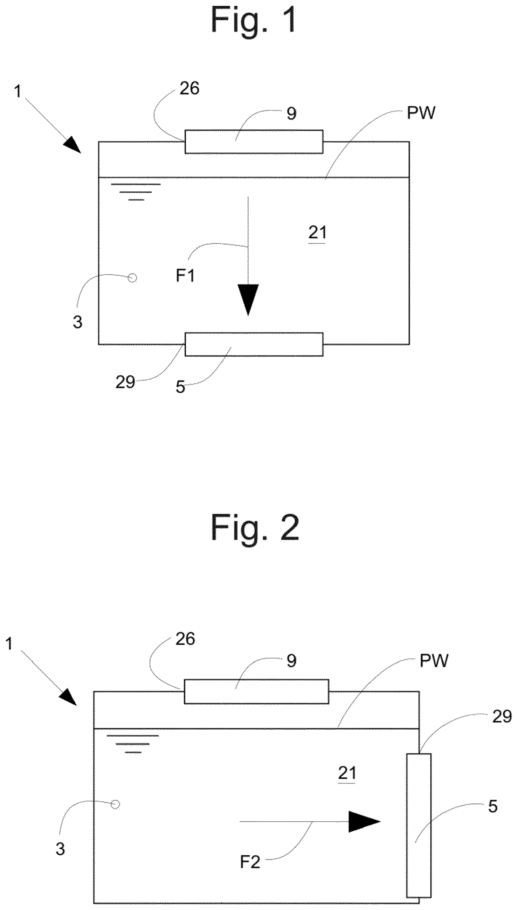

Figures 1 to 4 schematically shows a longitudinal section view of water treatment systems according to several examples.

The water treatment system 1 in Figures 1 to 4 may comprise:
a primary gastight treatment chamber 21 comprising:
   - a closable water inlet 26, and
   - a water outlet 29 closed by a membrane 5, wherein the membrane 5 is configured to prevent a flow of water when the pressure in the chamber is below a predetermined threshold and is configured to allow the flow of water therethrough and out of the chamber 21 when the pressure in the chamber is above the predetermined threshold, and
micromotors 3 inside the treatment chamber 21,
wherein the micromotors 3 comprise:
   - a functional region 32 comprising a material functionalized to remove a pollutant 34 from the water. The material of the functional region 32 may be able to remove the pollutant 34 from the water, and
   - a driving region 31 comprising a material able to or configured to generate gas bubbles 33 and causing build-up of pressure inside the chamber 21. The driving region 31 may contribute in the conversion of chemical energy into kinetic energy as will be detailed later.

In some examples, the material of the driving region 31 of the micromotors 3 may be suitable for generating gas bubbles 33 by chemically reacting with the water to be treated or by inducing a reaction in the water to be treated or in a product added to the water to be treated, preferably hydrogen peroxide, as will be described later.

When the gas bubbles 33 are generated by a chemical reaction of the material of the driving region 31 with the water to be treated, the material of the driving region 31 reacts with the pollutant of the water to be treated.

In the examples of Figures 1 and 2, the system 1 comprises a single primary chamber 21.

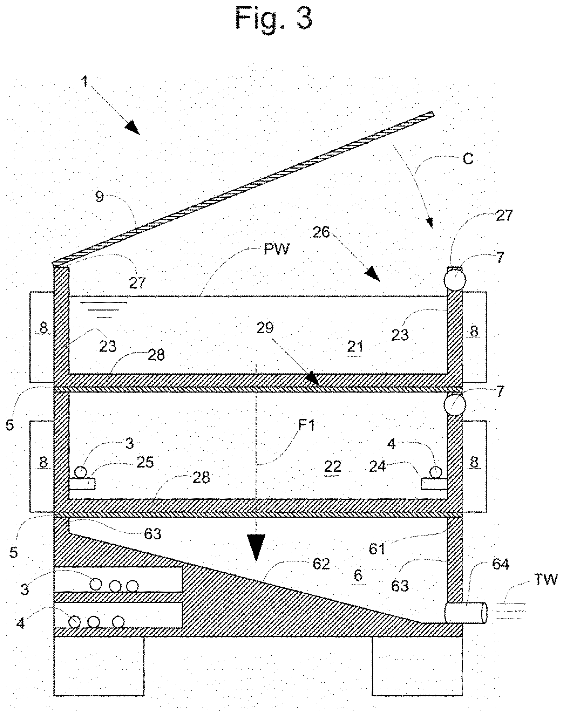

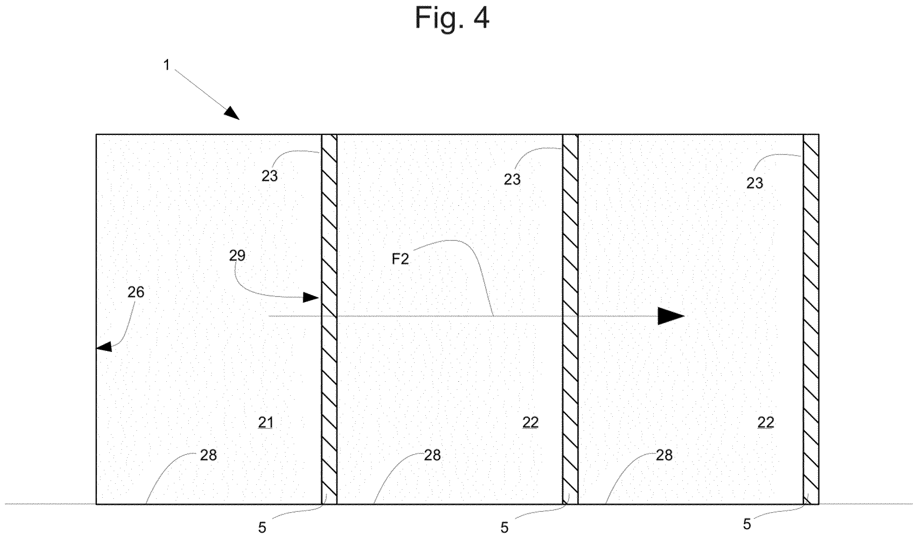

In some examples, as those ones of Figures 3 and 4, the water treatment system 1 may further comprise at least one secondary gastight treatment chamber 22, wherein the treatment chambers 21, 22 may be connected in series such that water to be treated flows from the primary chamber 21 to a secondary chamber 22, and from one secondary chamber 22 to another secondary chamber 22, wherein each secondary treatment chamber 22 may comprise:
- a water inlet 26 connected to the water outlet 29 of the treatment chamber 21, 22 immediately upstream,
- a water outlet 29 closed by a membrane 5, wherein the membrane 5 may prevent a flow of water when the pressure in the chamber is below a predetermined threshold and may allow the flow of water therethrough and out of the chamber 22 when the pressure in the chamber 22 is above the predetermined threshold, and
micromotors 3 inside the treatment chamber 22, wherein the micromotors 3 may comprise a functional region 32 comprising a material functionalized to remove a pollutant 34 from the water, and a driving region 31 comprising a material for generating gas bubbles 33 and causing build-up of pressure inside the chamber 22.

In some examples, the treatment chambers 21, 22 may be detachably secured to each other. Alternatively, the plurality of treatment chambers 21, 22 may be arranged as an integral body.

In one example, the gas-tight treatment chambers 21, 22 may be in fluid communication with each other. The fluid communication may be achieved in several ways: inserting or receiving a chamber 21, 22 at least partially into another chamber 22, or coupling two chambers 21, 22 without insertion or reception one into another. Alternatively, the treatment chambers 21, 22 may be connected to each other by means of tubes, ducts or the like. This may allow the water to pass a sequence of treatment chambers 21, 22 taking advantage of the positive pressure generated by the gas bubbles 33.

In the case of the illustrated examples of Figures 3, 4 where the plurality of treatment chambers 21, 22 is secured to each other, the inlet 26 of one chamber 22 faces the membrane 5 of another chamber 21, 22. A gas-tight seal or the like may be arranged in an edge 27 of the side wall 23 where both chambers 21, 22 may be in contact. Alternatively, the material or shape of the chamber 21, 22 may allow a gas-tight connection between chambers 21, 22.

In some examples, a treatment chamber 21, 22 may be shaped in such a way that the bottom wall 28 or a side wall 23 may fit into the interior of another treatment chamber 22, at least partially.

In the example of Figure 3, the membrane 5 is adjacent to the bottom wall 28 of a chamber 21, 22 placed above and the inlet 26 of the contiguous chamber 22 placed below.

In further examples, the system 1 may comprise a separator between a secondary chamber 22 and the immediately upstream chamber 21, 22. The separator may isolate the chamber 22 from the immediately upstream chamber 21, 22. The separator may be, for instance, a pressure barrier or a nonreturn system.

The pressure barrier may be a door, a gate, a valve, a damper or the like. The pressure barrier may be actuated to be opened or closed. The pressure barrier would allow the water flow from the chamber 21, 22 to the chamber 22 only when opened. Water would not flow back in the immediately upstream chamber 21, 22 if the pressure barrier is closed.

The nonreturn system may be embodied as a device or element which allows gas or water to pass from a treatment chamber 21, 22 to another chamber 22 only in one direction. The nonreturn system may be a nonreturn valve, membrane, duct, pipe or the like.

In some examples, the primary and the secondary treatment chambers 21, 22 may have different pressure thresholds. The pressure threshold of a secondary chamber 22 may be lower than the pressure threshold of the immediately upstream chamber 21, 22. This way, a backflow of the water may be prevented.

In one example, a series of treatment chambers 21, 22 may be arranged on top of each other, in such a way that the flow of water F1 may follow, at least partially, a vertical path. This example may be seen in Figure 3, where the main direction or path of the flow F1 is generally vertical through the stack of treatment chambers 21, 22.

In the example of Figure 1, the main direction or path of the flow F1 is also generally vertical.

In one example, a series of treatment chambers 21, 22 may be arranged beside each other in such a way that the flow of water F2 may follow, at least partially, a horizontal path. This example may be seen in Figure 4. The main direction or path of the flow F2 is generally horizontal, from left to right or vice versa, following the series of treatment chambers 21, 22.

In the example of Figure 2, the main direction or path of the flow F2 is also generally horizontal.

In the example of Figure 4, the membrane 5 is adjacent to the side wall 23 of a chamber 21, 22 placed on the left side and the inlet 26 of the contiguous chamber 22 placed on the right side.

Alternatively, the series of treatment chambers 21, 22 may be arranged in such a way that the water-flow may follow a direction with vertical and horizontal components, e.g. a slanted direction.

In some examples, as those ones illustrated in the attached Figures, the treatment chamber 21, 22 may comprise a hollow housing formed by a number of walls 23, 28. The treatment chamber 21, 22 may be generally shaped as, for instance, a drawer, a box, a ball or the like.

In some examples, the inlet 26 may be a tube, duct, channel or the like which may be gastightly shut. Alternatively, the treatment chamber 21, 22 may comprise a mouth as an example of chamber inlet 26 to receive polluted water PW. The latter can be seen in Figures 3 or 4.

In some examples, the chamber inlet 26 may be closed by means of a chamber inlet lid 9, cap or the like. In Figure 3 the chamber inlet lid 9 is in an open condition. However, a positive pressure may be built-up when the chamber inlet lid 9 is gastightly closed. Arrow C illustrates the direction followed by the chamber inlet lid 9 to shut the chamber inlet 26.

In one example, the membrane 5 may be located in or adjacent to a wall 23, 28. In the example of Figures 1 and 3, the membrane 5 is located in bottom wall 28 but it could be located for instance in a side wall 23 as per Figures 2 and 4. In some other examples, a membrane 5 may be provided in each wall 23, 28.

If membrane 5 is located adjacent to a wall 23, 28, the wall 23, 28 may comprise an opening or the like to allow the pass of water to the membrane 5.

In one example, the membrane 5 may extend along the length of the wall 23, 28. Alternatively, the outlet membrane 5 may extend partially along the length of the wall 23, 28.

In some examples, the membrane 5 may be made from materials such as: Polycarbonate (PC), Polyethersulfone (PES), polytetrafluorethylene (PTFE) or Nylon.

In some examples, the membrane 5 may comprise pores through which treated water may pass. The size and quantity of pores may vary for adjusting a pressure threshold value, duration of the treatment, types of pollutants, etc. The smaller the cross section of the pores is, the better quality of treated water may be achieved. Because of that the user will choose the pores with the smallest possible size. By way of non-limiting example, the pore size may be from 0.1 to 2 micrometers. Some non-limiting examples of commercial membranes could be Whatman™ or Milipore™.

In one example, the water treatment system 1 may further comprise a collection chamber 6 to receive treated water TW from at least one treatment chamber 21, 22. Alternatively, the treated water TW may exit the at least one or the last treatment chamber 21, 22 without any stage, receptacle or obstacle.

In some examples, the collection chamber 6 may comprise a plurality of collection walls 63 and a collection tap 64 for providing already treated water TW. The collection chamber 6 may be generally shaped as a drawer, sphere, box or the like. The collection chamber 6 may be in fluid communication with at least one treatment chamber 21, 22.

In one example, each collection wall 63 may comprise an edge 61 to be in contact with the treatment chamber 21, 22.

According to some examples, the catalyst coating 62 may be placed at the bottom of the collection chamber 6. The bottom of the collection chamber 6 may comprise a slope to lead the treated water to the collection tap 64.

In Figure 3, treated water TW has been illustrated pouring from the tap 64 for the sake of clarity. However, treated water may also exit from a membrane 5.

In some examples, the water treated through the present disclosure could be treated in a loop through the at least one treatment chamber. When there is a plurality of treatment chambers 21, 22, the water may enter again into the first stage which may correspond to the primary treatment chamber 21 after the last secondary chamber of 22 the sequence.

In the example of Figure 3, the collection chamber 6 is located at the bottom of the stack of treatment chambers 21, 22. Alternatively, the collection chamber 6 and the treatment chamber 21, 22 could be placed side by side.

Although in the example of Figures 1 or 3 the membrane/s 5 is/are placed in the bottom wall 22 of each treatment chambers 21, 22 and the water may follow up to down direction, the treatment cannot rely on the gravitational force to pass the water through the pores of the membrane 5. If the system were to rely on the gravitational force, the pore size should be wider than in the case of gas bubble built-up pressure; otherwise the water would hardly pass through the pores. With wider pores the water would pass through the membrane 5 partially treated and the water quality would be substantially poorer.

Therefore, the contribution of gravitational force in the example of Figures 1 to 4 may be considered as negligible.

In one example, the treatment chamber 21, 22 may comprise a micromotor holder 25 in which may be placed or store micromotors 3.

In some examples, the treatment chamber 21, 22 may comprise a purge valve 7. The purge valve 7 may be a safety valve in case the pressure built-in the treatment chambers 21, 22 needs to be release.

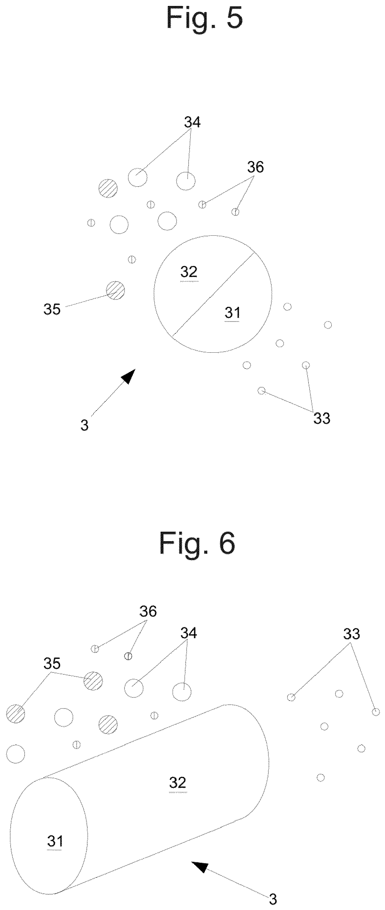

Figures 5 and 6 schematically show micromotors according to different examples.

Micromotors 3 may have of any suitable shape. By way of non-limiting example, micromotors 3 may have asymmetric, sphere-like, rod-like, helical-like or tube-like shapes. In Figure 5, a Janus microsphere has been illustrated as a non-limiting example of micromotor 3 and in Figure 6 a tube-like has been illustrated as a further non-limiting example of micromotor 3.

The size of micromotors may vary in the microscale or the nanoscale. By way of non-limiting example, for tubular micromotors, the diameter range may be from 1 to 80 micrometers and the length may be between 5 to 500 micrometers while in the case of spherical micromotors the diameter may be between 0.5 to 100 micrometers.

According to some examples, micromotors 3 may be reused in several treatment cycles or they may be non-reusable.

In some examples, the driving region 31 may be made, at least partially, of a material to be a catalyst of a chemical reaction where gas bubbles 33 may be produced. The water PW may be combined with substances that may react with the help of the catalyst material comprised in the driving region 31. The reaction may generate gas bubbles 33 to impel the micromotors 3.

In some other examples, the driving region 31 may be made, at least partially, of a material to be a reactive in a chemical reaction where gas bubbles 33 may be produced. By way of example, the material of the driving region 31 may comprise Magnesium which may react in water PW. Because of that reaction, hydrogen bubbles may be generated. The generation of hydrogen bubbles may enable the microbots 3 to swim.

In some examples, materials for driving region 31 may be chosen from at least one of the following: Platinum, Silver, Magnesium and metal oxides such as: Manganese dioxide (MnO₂), Cobalt ferrite (CoFe₂O₄), Manganese ferrite (MnFe₂O₄), Zinc ferrite (ZnFe₂O₄), Iron, Iron oxides, Titanium, etc.

In some examples, the removal of the pollutant may comprise at least one of the following: adsorption, degradation, extermination or the like.

More particularly, the examples of removal of the pollutant may comprise at least one of: heavy metal adsorption, organic compound removal or disinfection.

When it comes to the adsorption of heavy metals, the material for the functional region 32 may be any suitable material such as: Graphene and Graphene oxide, Silica, surface functionalized Silica using Thiol functional group containing molecules, Carbon, etc. These materials allow for an adsorptive removal of heavy metals such as: Lead, Mercury, Arsenic, Cadmium, Zinc or the like.

Regarding the organic pollutant removal, the functional region 32 may be made of any suitable material which may promote the degradation of the organic pollutant, at least partially. Some examples of these materials may comprise: Iron, Titanium dioxide (TiO₂), Iron (III) oxide (Fe₂O₃), Bismuth vanadate (BiVO₄), etc. Some non-limiting examples of organic compounds may be dyes such as Methylene blue, Rhodamine 6G, malachite green, etc, or pharmaceuticals such as hormones, antibiotics, etc.

Regarding the example of disinfection, the functional region 32 may be made, at least partially, of any suitable material which may promote the removal of microorganisms. Some non-limiting examples of microorganisms to be removed may be bacteria or virus. The functional region 32 may be made from materials such as Gold and Silver for microorganism adhesion and extermination.

In one example, the treatment chamber 21, 22 may comprise a magnet holder 8 for at least one magnet for the extraction or retention of micromotors 3 when micromotors comprise ferromagnetic-material. This may be carried out when the treatment is already performed. Alternatively, the treatment chamber 21, 22 may comprise electromagnet for extracting micromotors if needed. The ferromagnetic-material micromotors 3 may comprise a supporting portion to support the shape of the micromotor itself or to give it properties such as magnetism. The supporting portion may be made from a material such as: Iron, Nickel, Silica, polymers (PEDOT, Poly-pyrrol), etc.

In one example, the micromotors 3 of each treatment chamber 21, 22 may be targeted to a different pollutant 34.

In one example, the secondary treatment chamber 22 may comprise organic-compound targeted micromotors 3 and the treatment chamber 21, 22 immediately upstream may comprise heavy-metal targeted micromotors 3.

In one example, the treatment chamber 21, 22 may comprise micromotors 3 which may be targeted to different types of pollutants 34.

In one example, the treatment chamber 21, 22 may also receive a supporting chemical reagent 35. The chamber 21, 22 may also comprise a reagent holder 24 for storing or supporting the reagent.

In some examples, the supporting chemical reagent 35 may comprise at least one of: Hydrogen peroxide, Sodium borohydride, Hydrazine or the combination thereof.

In one example, the material of the functional region 32 may be functionalized to react with the supporting chemical reagent 35 and produce oxidative species 36 to remove a pollutant 34. This could be the case at least for degrading organic compounds or disinfection as will be set forth in the following.

According to one example for degrading organic compounds, the supporting chemical reagent 35 may be Hydrogen peroxide. The material of the functional region 32 may be iron and iron oxide-based catalytic, and the iron may react with Hydrogen peroxide to produce oxidative species such as OH⁻. This way the organic compounds may be degraded.

According to one example for disinfection, the supporting chemical reagent 35 may be Hydrogen peroxide. The material of the functional region 32 may be for instance a material to catalyse the Hydrogen peroxide. The disinfection may be carried out by the reactive oxygen species 36 generated by the chemical reaction.

When a supporting chemical reagent 35 is received in the treatment chamber 21, 22, the driving region 31 may act as a catalyst of a chemical reaction with the reagent 35. For instance, the supporting chemical reagent 35 may be Hydrogen peroxide and Oxygen bubbles may be generated for self-propelling and building-up pressure. Alternatively, the reagent 35 may be Sodium borohydride, Hydrazine or the like and the bubbles may be of Hydrogen. Therefore, the supporting chemical reagent 35 may act as a fuel for the micromotors 3.

In one example, the collection chamber 6 may comprise a catalyst coating 62 to degrade the supporting chemical reagent 35. Alternatively, the collection chamber 6 may comprise an UV source to degrade the supporting chemical reagent 35. This way, if there is any remaining amount of reagent it could be removed from the water.

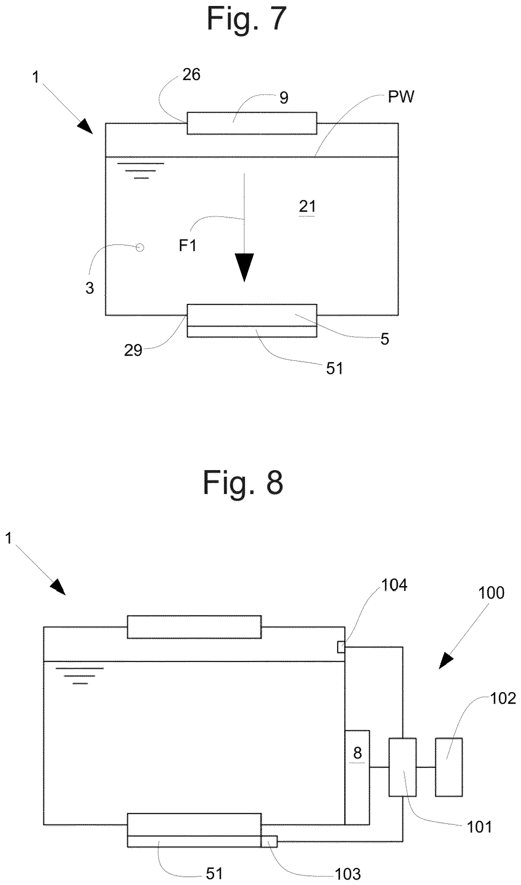

Figure 7 schematically shows a longitudinal section view of a water treatment system 1 according to an alternative example. The configuration of this example is similar to the example of water treatment system 1 of Figure 1. However, in Figure 7 it can be seen that the system 1 may further comprise a chamber outlet lid 51 associated with the membrane 5. The chamber outlet lid 51 may be positioned with respect to the membrane upstream or downstream. Therefore, the flow of treated water through the membrane 5 may be prevented either by preventing the water of the chamber 21, 22 from reaching the membrane 5 (upstream) or by preventing the water from coming out of the membrane 5 (downstream).

Figure 8 schematically shows a longitudinal section view of the water treatment system 1 of figure 7 with an optional automation system 100.

Although the water treatment as described herein can be carried out by the treatment system 1 without the need of a power source and without the need of direct monitoring of the users, in some alternative examples the system 1 may further comprise a power source such as an inbuilt rechargeable battery 102. The inbuilt rechargeable battery 102 may be used for feeding an optional automation system 100 of the treatment system 1.

The automation system 100 may comprise a microcontroller computer 101, pressure sensors 104 and/or electric motors 103. The computer may be in data communication with the pressure sensors 104 and the pressure sensors 104 may be located, for instance, inside treatment chamber 21, 22, at the water inlet 26, and/or at the water outlet 29. The computer may be also in data communication with any electric motors 103 which may operate any lids 9, 51 to control the water flow, for instance, to allow the water to flow out of a treatment chamber 21, 22. If the treatment system 1 comprises electromagnets for extracting micromotors the computer may be also in communication with said electromagnets to activate them.

Even if the treatment system 1 comprises the optional automation system 100, the power consumption of the system 1 is lower than the systems in which power is needed to drive the water, for instance, through filters. The components of the optional automation system 100 may be characterized by a low power consumption in comparison with the components of systems where vacuum or positive pressure are generated to drive the polluted water.

According to a further aspect, a water treatment method comprises:
providing a primary gastight treatment chamber 21 with micromotors 3;
feeding polluted water PW to the treatment chamber 21. The polluted water PW may be fed by means of any suitable ways such as a pipe, a tank, a spring, a tap, a sewer, or even from a source of partially-treated water. The micromotors may be provided, for instance, when the primary treatment chamber 21 has not been fed with water yet or when the primary treatment chamber 21 has been already fed;
allowing a pressure to build-up inside the primary treatment chamber 21;
causing treated water TW to exit through a water outlet 29 of the primary treatment chamber 21;
wherein the micromotors 3 comprise:
   - a functional region 32 comprising a material functionalized to remove a pollutant 34 from the water, and
   - a driving region 31 comprising a material for generating gas bubbles 33 and causing build-up of pressure inside the chamber 21. Micromotors 3 could be any of the herein disclosed examples in order to implement the treatment method;
wherein the water outlet 29 is closed by a membrane 5, and the membrane 5 preventing a flow of water when the pressure in the chamber 21 is below a predetermined threshold and allowing the flow of water therethrough and out of the chamber 21 when the pressure in the chamber 21 is above the predetermined threshold.

When the gas bubbles are generated, micromotors 3 can scrub and swim impelled by those gas bubbles. Due to the size of micromotors 3 and their motion they may induce microscale mixing, i.e. mixing at the molecular level so as to enhance pollutant's removal. After a period of time the amount of the positive pressure built-up inside the gastight treatment chamber 21 may reach a pressure threshold value. The pressure threshold value, and therefore the duration of the treatment, may be predetermined by setting operation conditions. The operation conditions may comprise: volume of the chamber, features of the membrane, type of pollutant, quantity and features of micromotors, number of treatment stages, etc. By controlling the operation conditions involved in the water treatment the duration of the treatment and the water quality may be accurately estimated. By way of non-limiting example, the treatment may take some minutes or hours.

In some examples, the treated water TW may be discharged, for instance, into drinking water supply systems, containers, watering systems, streams, rivers, sea or the like.

In one example, the water treatment method may further comprise:
providing at least one secondary gastight treatment chamber 22, wherein the treatment chambers 21, 22 may be connected in series such that water to be treated may flow from the primary chamber 21 to a secondary chamber 22, and from one secondary chamber 22 to another;
providing micromotors 3 inside the secondary treatment chamber 22. This may be done, for instance, when the secondary treatment chamber 22 has not been fed with water yet or when the secondary treatment chamber 22 has been already fed;
allowing a pressure to build-up inside the secondary treatment chamber 22;
causing treated water to exit through a water outlet 29 of the secondary treatment chamber 22.

The operation in the secondary gastight treatment chamber 22 will be the same as or similar to the primary treatment chamber 21 *mutatis mutandis.* However, the secondary chamber 22 is fed with water which has been, at least partially, treated upstream.

In one example, the polluted water PW may flow continuously through the plurality of chambers 21, 22.

In one example, the polluted water PW may be treated in batches or stepwise through the plurality of chambers 21, 22.

In one example of the water treatment method, a series of treatment chambers 21, 22 may be arranged on top of each other, in such a way that the flow of water F1 may follow, at least partially, a vertical path.

In one example of the water treatment method, a series of treatment chambers 21, 22 may be arranged beside each other in such a way that the flow of water F2 follows, at least partially, a horizontal path.

In some examples, the polluted water PW may be treated through the plurality of chambers 21, 22 following a specific sequence of pollutant removals or stages. For instance, in a primary treatment chamber 21 heavy metals may be removed from the polluted water PW. When the water void of heavy metals exits from the chamber 21 through the membrane 5 it may enter a secondary treatment chamber 22 for removing organic compounds.

According to some examples, there may be several alternatives to pour or discharge the treated water from one treatment chamber 21, 22: for instance it may enter another treatment chamber 22, it may enter the collection chamber 6, it may be guided through a pipe or the like.

In one example, the water treatment method may further comprise adding a supporting chemical reagent 35 to the polluted water PW. The chemical reagent 35 may be added before starting a degradation process in each treatment chamber. The supporting chemical reagent 35 may be any of the herein disclosed examples. When the supporting chemical reagent 35 is the fuel for propelling micromotors 3, the starting point of the generation of gas bubbles and the amount of produced gas may be controlled or determined.

In the examples wherein the treatment chamber 21, 22 comprises a magnet holder 8, the method may further comprise extracting or retaining micromotors 3. The micromotors 3 may be extracted once a particular stage in the treatment is already completed or at least partially completed. The micromotors 3 may be retained in a part of the treatment chamber 21, 22, e.g the micromotor holder 25. By retaining the micromotors 3 the generation of gas bubbles may be controlled.

In some examples, when the secondary chamber 22 is fed with water and gas bubbles are generated, the generated gas may expand into the secondary chamber 2 itself and at least the immediately upstream chamber 21, 22 which substantially may have no water to treat. The volume for the gas to expand may be the total volume of the secondary chamber 22 and the immediately upstream chamber 21, 22. So, the pressure build-up might take more time and amount of gas compared to a primary treatment chamber 21.

Alternatively, when the system 1 comprises a separator between a secondary chamber 22 and the immediately upstream chamber 21, 22, the method may comprise isolating the at least one secondary chamber 22 from the immediately upstream chamber 21, 22. The isolation between chambers 21, 22 may be achieved by actuating the separator or causing the separator to prevent a backflow from the secondary chamber 22 to the immediately upstream chamber 21, 22. The pressure barrier may be actuated to be closed or opened. The nonreturn system may cause that the backflow is prevented. Once the water is substantially in the secondary chamber 22 and the gas bubbles are generated therein, the gas volume for the gas to expand may be the volume of the secondary chamber 22. So, the pressure build-up might take less time and amount of gas compared to a system 1 without a separator.

In some examples, the method may further comprise setting the pressure thresholds in the treatment chambers 21, 22 in such a way that a pressure threshold of a secondary chamber 22 may be lower than the pressure threshold of the immediately upstream chamber 21, 22. This way, a backflow of the water may be prevented. This may be the case in a system 1 wherein the primary and the secondary treatment chambers 21, 22 may have different pressure thresholds.

In one example, the pressure thresholds along each of the treatment chambers 21, 22 may be lower at each stage of the series of chambers.

In the alternative examples in which the water treatment system 1 comprises an optional automation system 100 as aforementioned, the computer 101 may be configured to determine on the basis of the data coming from the pressure sensors 104 that the pressure built-in in the treatment chamber 21, 22 has reached a predetermined pressure threshold value. Then, the computer 101 may be configured to send a command to an electric motor 103 configured to actuate a chamber outlet lid 51 so as to allow a treated water flow from the treatment chamber 21, 22. In an example, the computer may be also configured to actuate a chamber inlet lid 9.

In the examples where the water treatment system 1 comprises electromagnets, the computer may be further configured to send a command to electromagnets when the computer determines that the water treatment is concluded.

Alternatively, the chamber outlet lid 51 may actuated by hand.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. Water treatment system comprising:
a primary gastight treatment chamber comprising:
- a closable water inlet, and
- a water outlet closed by a membrane, wherein the membrane prevents a flow of water when the pressure in the chamber is below a predetermined threshold and allowing the flow of water therethrough and out of the chamber when the pressure in the chamber is above the predetermined threshold, and
micromotors inside the treatment chamber,
wherein the micromotors comprise:
- a functional region comprising a material functionalized to remove a pollutant from the water, and
- a driving region comprising a material for generating gas bubbles and causing build-up of pressure inside the chamber.

2. Water treatment system according to claim 1, the material of the driving region of the micromotors is suitable for generating gas bubbles by chemically reacting with the water to be treated or by inducing a reaction in the water to be treated or in a product added to the water to be treated, preferably hydrogen peroxide.

3. Water treatment system according to any one of claims 1 - 2, further comprising at least one secondary gastight treatment chamber, wherein the treatment chambers are connected in series such that water to be treated flows from the primary chamber to a secondary chamber, and from one secondary chamber to another, wherein each secondary treatment chamber comprises:
- a water inlet connected to the water outlet of the treatment chamber immediately upstream,
- a water outlet closed by a membrane, wherein the membrane prevents a flow of water when the pressure in the chamber is below a predetermined threshold and allowing the flow of water therethrough and out of the chamber when the pressure in the chamber is above the predetermined threshold, and
micromotors inside the treatment chamber, wherein the micromotors comprise a functional region comprising a material functionalized to remove a pollutant from the water, and a driving region comprising a material for generating gas bubbles and causing build-up of pressure inside the chamber.

4. Water treatment system according to claim 3, wherein a series of treatment chambers is arranged on top of each other, in such a way that the flow of water follows, at least partially, a vertical path.

5. Water treatment system according to claim 3, wherein a series of treatment chambers is arranged beside each other in such a way that the flow of water follows, at least partially, a horizontal path.

6. Water treatment system according to any one of claims 3 - 5, wherein the micromotors of each treatment chamber are targeted to a different pollutant.

7. Water treatment system according to any one of claims 3 - 6, wherein the secondary treatment chamber comprises organic-compound targeted micromotors and the treatment chamber immediately upstream comprises heavy-metal targeted micromotors.

8. Water treatment system according to any one of claims 1 - 7, wherein the treatment chamber comprises micromotors which are targeted to different types of pollutants.

9. Water treatment system according to any one of claims 1 - 8, further comprising:
a collection chamber to receive treated water from at least one water outlet.

10. Water treatment method comprising:
providing a primary gastight treatment chamber with micromotors;
feeding polluted water to the treatment chamber;
allowing a pressure to build-up inside the primary treatment chamber;
causing treated water to exit through a water outlet of the primary treatment chamber;
wherein the micromotors comprise:
- a functional region comprising a material functionalized to remove a pollutant from the water, and
- a driving region comprising a material for generating gas bubbles and causing build-up of pressure inside the chamber;
wherein the water outlet is closed by a membrane, and the membrane preventing a flow of water when the pressure in the chamber is below a predetermined threshold and allowing the flow of water therethrough and out of the chamber when the pressure in the chamber is above the predetermined threshold.

11. Water treatment method according to claim 1, further comprising:
providing at least one secondary gastight treatment chamber, wherein the treatment chambers are connected in series such that water to be treated flows from the primary chamber to a secondary chamber, and from one secondary chamber to another;
providing micromotors inside the secondary treatment chamber;
allowing a pressure to build-up inside the secondary treatment chamber;
causing treated water to exit through a water outlet of the secondary treatment chamber.

12. Water treatment method according to claim 11, wherein the polluted water flows continuously through the series of chambers.

13. Water treatment method according to claim 11, wherein the polluted water is treated in batches or stepwise through the series of chambers.

14. Water treatment method according to any one of claims 12 - 13, wherein a series of treatment chambers is arranged on top of each other, in such a way that the flow of water follows, at least partially, a vertical path.

15. Water treatment method according to any one of claims 12 - 13, wherein a series of treatment chambers is arranged beside each other in such a way that the flow of water follows, at least partially, a horizontal path.
